# EUROPEAN PATENT SPECIFICATION

(11) **EP 2 613 296 B1**
(45) Date of publication and mention of the grant of the patent: **25.10.2017**
(21) Application number: 11821593.8
(22) Date of filing: 22.08.2011
(51) Int. Cl.: G06T 19/00, G09G 5/00, G09G 5/36, G09G 5/377, G06F 3/147, G06F 3/14

(54) **MIXED REALITY DISPLAY SYSTEM, IMAGE PROVIDING SERVER, DISPLAY APPARATUS, AND DISPLAY PROGRAM**
SYSTEM ZUR ANZEIGE EINER GEMISCHTEN REALITÄT, BILDBEREITSTELLUNGSSERVER, ANZEIGEVORRICHTUNG UND ANZEIGEPROGRAMM
SYSTÈME D'AFFICHAGE EN RÉALITÉ MIXTE, SERVEUR DE FOURNITURE D'IMAGES, APPAREIL ET PROGRAMME D'AFFICHAGE

(30) Priority: 30.08.2010 JP 2010191692
(43) Date of publication of application: 10.07.2013
(73) Proprietor: The University of Tokyo, Bunkyo-ku, Tokyo 113-8654 (JP); Asukalab Inc., Tokyo 153-8505 (JP)
(72) Inventor: KAKUTA Tetsuya, Tokyo 1538505 (JP); IKEUCHI Katsushi, Tokyo 113-8654 (JP); OISHITakeshi, Tokyo 113-8654 (JP); KAGESAWA Masataka, Tokyo 113-8654 (JP)
(74) Representative: Klunker IP Patentanwälte PartG mbB
(86) International application number: PCT/JP2011/068853
(87) International publication number: WO 2012/029576

(56) References cited:
- JP-A- 10 208 073
- JP-A- 2003 264 740
- JP-A- 2004 102 835
- JP-A- 2005 020 559
- JP-A- 2005 107 968
- US-A1- 2004 167 806
- Fumio Okura ET AL: "Augmented Telepresence from the Sky: AR using Autopilot Airship and Omni-directional Camera", 3rd Korea-Japan Workshop on Mixed Reality, KJMR2010, April 2010 (2010-04), pages 190-200, XP055192847, Retrieved from the Internet: URL:http://yokoya.naist.jp/paper/datas/115 5/KJMR2010.pdf [retrieved on 2015-06-01]
- Masayuki Kanbara ET AL: "Nara Palace Site Navigator: A Wearable Tour Guide System Based on Augmented Reality", Proc. 3rd CREST/ISWC Workshop on Advanced Computing and Communicating Techniques for Wearable Information Playing, October 2004 (2004-10), XP055193067, Retrieved from the Internet: URL:http://www.researchgate.net/profile/Ma sanao_KOEDA/publication/242439851_Nara_Pal ace_Site_Navigator_A_Wearable_Tour_Guide_S ystem_Based_on_Augmented_Reality/links/53f 4b4870cf2888a7491147a.pdf [retrieved on 2015-06-02]
- SHENCHANG ERIC CHEN ED - COOK R: "QUICKTIME VR - AN IMAGE-BASED APPROACH TO VIRTUAL ENVIRONMENT NAVIGATION", COMPUTER GRAPHICS PROCEEDINGS. LOS ANGELES, AUG. 6 - 11, 1995; [COMPUTER GRAPHICS PROCEEDINGS (SIGGRAPH)], NEW YORK, IEEE, US, 6 August 1995 (1995-08-06), pages 29-38, XP000546213, ISBN: 978-0-89791-701-8
- Tetsuya Kakuta ET AL: "Real-time Soft Shadows in Mixed Reality Using Shadowing Planes", MVA2007 1APR Conference on Machine Vision Applications, May 16-18, 2007, Tokyo, JAPAN, 16 May 2007 (2007-05-16), pages 195-198, XP055193848, Tokyo, Japan Retrieved from the Internet: URL:http://www.cvl.iis.u-tokyo.ac.jp/~oish i/Papers/Kakuta_RT_Soft_Shadows_MVA2007.pd f [retrieved on 2015-06-05]

## Description

### Field of The Invention

The present invention relates to a Mixed Reality display system synthesizing a real scene image and a virtual object and displaying the same, and more specifically, to a Mixed Reality display system capturing a synthesized (or composite) image generated by an image providing server and displaying the same to a display device disposed on an observer side.

### Background Technology

There has been actively done research relating to a display system capable of appearing a virtual object represented by computer graphics technology (CG) by overlapping the virtual object represented by the CG technology on a shot image of an actual world and displaying it on a display device of an observer. Such display system is generally called Mixed Reality or Augmented Reality (hereunder, called "Mixed Reality display system").

With the mixed reality display system, there are needed a camera for taking (photographing) an image of an actual world, a processing device (processor) for synthesizing a virtual object to the shot image in view direction, and a display (display device) for displaying the synthesized image. Accordingly, there is generally used a stand-alone device such as personal computer (PC), portable terminal (cellular phone, PDA, smart phone or like), and head mount display (HMD) in which a camera, a processor and a display are integrated). In the meantime, there has been provided a system for sharing the shot image in view direction sent from the HMD to a plurality of persons through an image processor (see Patent Document 1). Further, in a Non-Patent Document 1 discloses a technology in which a shadow of a virtual object is prepared by using a light source (lighting) environment of the actual world.

In order to express more preferably the Mixed Reality, it should be necessary to suitably reflect a 3D (three-dimensional) CG object to a light source environment of the actual world. Patent Document 2 discloses a method of estimating a light source by moving an HMD camera.

### Prior Art Document

### Patent Document

Patent Document 1: Japanese Patent Laid-open Publication No. 2009-37487
Patent Document 2: Japanese Patent Laid-open Publication No. 2008-33531

### Non-Patent Document

Non-Patent Document 1: "High-Speed Shadow Expressing Method In Mixed Reality Using Shadowing Plain" By Tetsuya Kakuta, Katsushi Ikeuchi, and Takeshi Oishi, From Magazine of Image Information Media Association 62(5), Pages 788-795, Published on 2008-05-01" Fumio Okura et al.: Augmented Telepresence from the Sky: AR using Autopilot Airship and Omni-directional Camera", 3rd Korean-Japan Workshop on Mixed Reality, KJMR2010, April 2010 (2010-04), teaches an augmented telepresence system using remote controlled vehicle or robots.

Masayuki Kanbara et al.: "Nara Palace Site Navigator: A Wearable Tour Guide System Based on Augmented Reality", Poceeding 3rd CREST/ISWC Workshop on Advanced Computing and Communicating Techniques for Wearable Information Playing, October 2004, teaches a wearable tour guide system using augmented reality techniques which can merge the real and virtual worlds.

### Disclosure of The Invention

### Problem to be solved by The Invention

In a case of simultaneous experience of synthesized image by a plurality of users at an event or visitor information, the number of stand-alone devices corresponding to the number of users are required to be prepared, resulting in highly increased cost, thus providing a problem.

Further, in a method of taking (photographing) an image of actual world by a single camera, then synthesizing it with a virtual object by using an image synthesizing device, and thereafter, distributing the synthesized image into display devices of a plurality of users, such operation can be done by one dedicated camera and the image synthesizing device. However, in such method, a plurality of users are merely commonly experienced with the same synthesized image, and hence, it is impossible to change observing point of each of the users.

In consideration of the circumstances mentioned above, an object of the present invention is to provide a Mixed Reality display system and so on capable of experiencing Mixed Reality for users while freely changing their lines of sight (observing points) at a time when a plurality of users experience a synthesized image.

### Means for solving The Problem

A Mixed Reality display system according to the present invention is a Mixed Reality display system which is constructed to perform communication between an image providing server and a plurality of display devices, the image providing server comprising: a virtual object representing means that represents a three-dimensional virtual object; synthesizing means that synthesizes the three-dimensional virtual object represented by the virtual object representing means and an omnidirectional real scene image taken by an omnidirectional camera, wherein the synthesizing means generates an omnidirectional synthesized image by superimposing the omnidirectional real scene image with the synthesized three-dimensional virtual object; and delivery means that delivers the omnidirectional synthesized image to the plurality of display devices, and the display devices each comprising: receiving means that receives the omnidirectional synthesized image from the image providing server; position/pose information obtaining means that obtains at least either one of position information or pose information defining line of sight of a user observing the display device; extracting means that extracts a partial area image from the omnidirectional synthesized image based on the position information and/or pose information; and display means that displays the partial area image.

A Mixed Reality display method according to the present invention is a Mixed Reality display method that displays an image synthesized by synthesizing a three-dimensional virtual object and an omnidirectional real scene image by a plurality of display devices, wherein an image providing server performs a step of synthesizing the three-dimensional virtual object and the omnidirectional real scene image taken by an omnidirectional camera capable of a predetermined azimuth angle area, wherein an omnidirectional synthesized image is generated by superimposing the omnidirectional real scene image with the synthesized three-dimensional virtual object, and a step of delivering the omnidirectional synthesized image after the synthesizing to a plurality of display devices, and each of the display devices performs a step of obtaining at least either one of position information or pose information defining line of sight of a user observing the display device, a step of extracting a partial area image from the omnidirectional synthesized image based on the position information and/or pose information, and a step of displaying the partial area image.

### Effects of The Invention

According to the Mixed Reality display system of the present invention, it is possible for users to experience the Mixed Reality by freely changing own line of sight without loading in processing to the display device.

According to a Mixed Reality display method of the present invention, a Mixed Reality can be experienced by a user while freely changing his (or her) own line of sight without loading in processing to the display device.

### Brief Description of The Drawings

[Fig. 1] is a schematic diagram for explaining a Mixed Reality display system according to the present invention.
[Fig. 2] is a block diagram representing a structural example of the Mixed Reality display system S1 according to a first embodiment of the present invention.
[Fig. 3] is a schematic view explaining the first embodiment.
[Fig. 4] (A) is a view explaining an instruction input device 4, (B) and (C) show examples of display area indicating interface of the instruction input device 4.
[Fig. 5] is a flowchart representing an omnidirectional synthesized image distribution processing of an image providing server 1 according to the first embodiment.
[Fig. 6] is a flowchart representing a display processing of a client terminal 3 according to the first embodiment.
[Fig. 7] is a block diagram representing a structural example of a Mixed Reality display system S2 according to a second embodiment of the present invention.
[Fig. 8] is a schematic view explaining the second embodiment.
[Fig. 9] is a flowchart representing a partial area image transmitting processing of an image providing server 5 according to the second embodiment.
[Fig. 10] is a schematic view explaining a case in which a plurality of omnidirectional image obtaining cameras are provided.

### Mode for embodying The Invention.

Hereunder, an embodiment of the present invention will be explained. It is further to be noted that in the present embodiment, there is explained a case in which a display device according to the present invention is applied to a client terminal provided for a Mixed Reality display system.

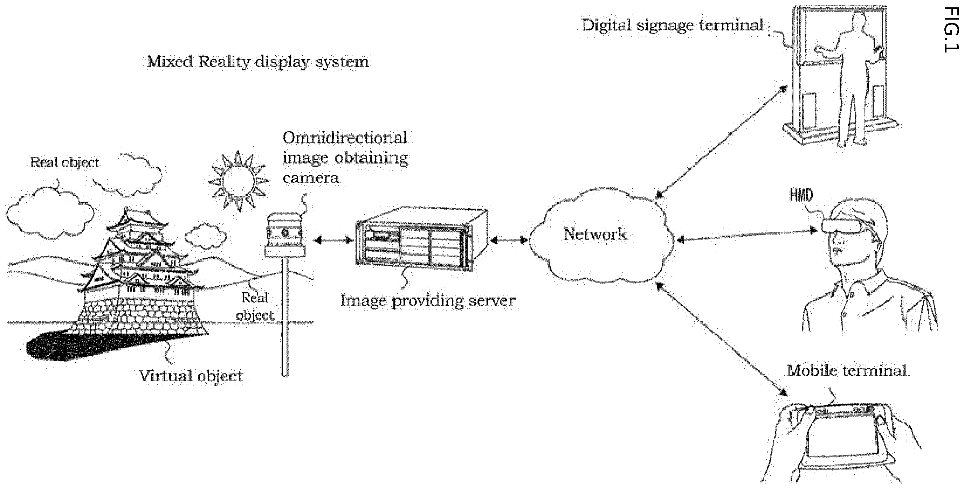

Fig. 1 is a schematic view for explaining a Mixed Reality display system according to the present invention. The Mixed Reality display system is composed of an image providing server, an omnidirectional image obtaining camera as an omnidirectional image obtaining means, and a plurality of client terminals. The client terminals may include HMDs (Head Mounted Display), digital signage terminals, mobile terminals (portable cellular, PDA, smart phone), and the like. The Mixed Reality display system may be, for example, constructed and provided at and in everywhere, for example, event venues, sight-seeing places and the like regardless of indoor or outdoor places.

The omnidirectional camera is a device for taking (photographing) images in actual world. The image providing server serves to obtain a synthesized image obtained by superimposing a virtual object represented (CG) image with an omnidirectional image taken by the omnidirectional image obtaining camera (an example of an image computer tag reality space image in which a real object is photographed), and the client terminal receives the synthesized image from the image providing server and display the same. According to such manner, a user experiences an image as if the CG represented virtual image appears in the actual world.

Next, first and second embodiments of the present invention will be represented.

The first embodiment is an example of a Mixed Reality display system S1 by means of a broadcast, and the image providing server derivers (distributes) a synthesized image to a plurality of client terminals. On the other hand, the second embodiment is an example of a Mixed Reality display system S2 by means of a unicast, and the image providing server will transmit the synthesized image in response to image transmission request from each of the client terminals.

### <First Embodiment>

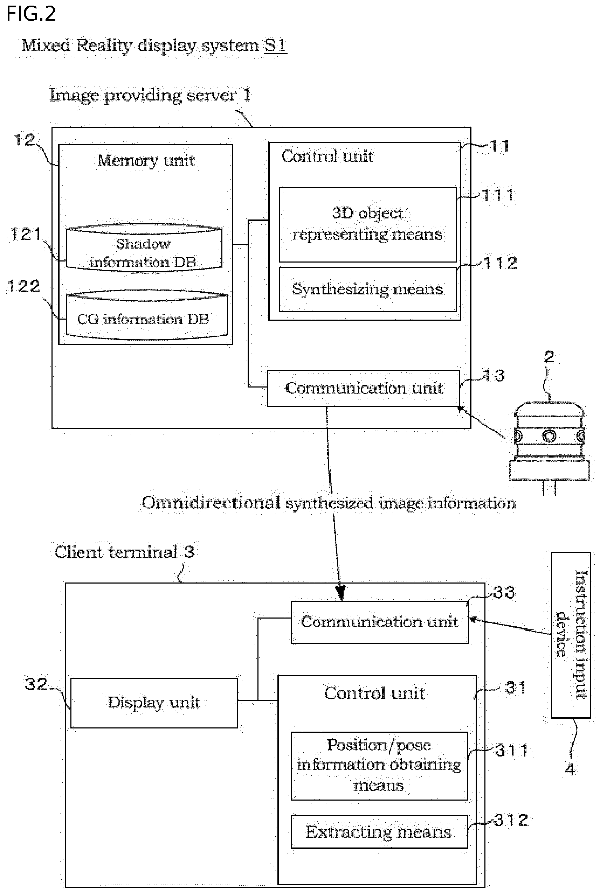

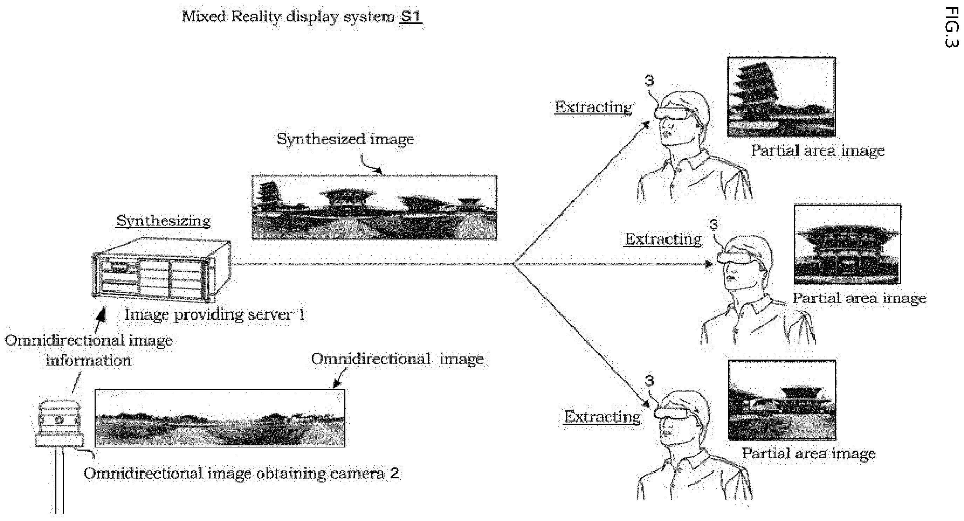

Fig. 2 is a block diagram showing a structural example of the Mixed Reality display system according to the first embodiment, and Fig. 3 is a schematic view for explaining the first embodiment.

The Mixed Reality display system S1 is composed of an image providing server 1, an omnidirectional image obtaining camera 2, a plurality of client terminals 3, an instruction input device 4 (one example of command input means according to the present invention) and so on. Further, for the sake of easy explanation, in Fig. 2, only one client terminal 3 is shown.

The image server 1 is composed of a control unit 11 provided with a CPU having an operating (computing) function, a working RAM, a ROM storing various data and program, and the like, memory unit 12 provided with a hard disk drive and the like, and a communication unit 13 for performing communication, through various networks (including LAN (Local Area Network)), among the omnidirectional image obtaining camera 2, the client terminals 3, and other units or various peripheral machineries or like. The above respective units or sections are respectively connected by buses.

The memory unit 12 stores a shadow information database (DB) 121, CG information database (DB) 122 and so on. In the shadow information DB 121, 3D (three-dimensional) object shadow information is registered. The 3D object shadow information includes various informations such as basic data necessary for carrying out shadowing a 3D CG object. In the CG information DB 122, there is registered a CG information for generating 3D CG objects such as cultural buildings, a rendering of new buildings, annotations, road guides, characters, advertisements and so on.

The control unit 11 is provided with a 3D object representing means 111, a synthesizing means 112 and so on. The 3D object representing means 111 is one example of a virtual object representing means according to the present invention, and based on the information of the shadow information DB 121 and the CG information DB, a 3D CG object as one example of the virtual image is represented. The synthesizing means 112 generates an omnidirectional synthesized image by superimposing an omnidirectional image from the omnidirectional image obtaining camera 2 with the 3D CG object generated by the 3D object representing means 111.

Further, since concrete or specific means for shadowing the 3D CG object, representing the 3D CG object and synthesizing the images are disclosed in detail in Japanese Patent Application No 2009-211891, by the same applicant as that of the subject application, the explanation thereof will be omitted herein.

The omnidirectional image obtaining camera 2 can take (photograph) an area of predetermined azimuth angle region. For example, it may be desired to take all azimuth directions including a top portion. The omnidirectional image obtaining camera 2 performs taking repeatedly at one per several ten seconds (one/several tens seconds), for example, and at every taking period, the omnidirectional image information (one example of the real scene image information in the present invention) will be transmitted to the image providing server 1.

The 3D object representing means 111 of the image providing server 1 performs proper shadowing with respect to the 3D CG object based on the actual world light source environment information included in the omnidirectional image information received from the omnidirectional image obtaining camera 2, which is then superimposed with the omnidirectional image to thereby generate the omnidirectional synthesized image. The 3D object obtaining means 111 and the synthesizing means 112 of the image providing server 1 generate the omnidirectional synthesized image every time of receiving new omnidirectional image information from the omnidirectional image obtaining camera 2. The thus generated omnidirectional synthesized image is delivered (shared) simultaneously to a plurality of client terminals 3.

Each of the client terminals 3 includes a control unit as a computer according to the present invention composed of a CPU having an operating (computing) function, a working RAM, a ROM storing various data and program (including Mixed Reality display program according to the present invention), and display unit provided with a display screen such as monitor, and a communication unit 13 for performing communication, through various networks (including LAN (Local Area Network)), with other peripheral machineries including the image providing server 1 or other device or instruction input unit 4. The above units or sections are respectively connected by means of buses.

The control unit 31 includes a position/pose information obtaining means 311, an extracting means 312 and so on.

The position/pose information obtaining means 311 obtains a position/pose information defining line of sight of a user. The position/pose information changes, for example, in a case where the client terminal 3 is the HMD, in accordance with pose (orientation) of a user mounted with the HMD. The position/pose information obtaining means 311 is composed of either one of gyro sensor, magnetic sensor, GPS (Global Positioning System), or acceleration sensor, or combination thereof. Further, other than the combination of sensor hardware, the position/pose information may be obtained by means of a two-dimensional marker, an LED marker, a visible marker, an invisible (retroreflector) marker in combination of a camera, or positioning means by an optical tracking technology using image characteristic points. In addition, the position/pose information may be either one of position information of the use or the pose information thereof.

The extracting means 312 extracts a partial area image from the omnidirectional synthesized image received from the image providing server 1. More specifically, based on the position/pose information obtained by the position information obtaining means 311, positional area and directional area indicated by the position/pose information are captured from the omnidirectional synthesized image, which is then extracted. The extracted partial area image is displayed on a monitor or like of the display unit 32. Thus, the user can observe the partial area image in accordance with own position/pose area image.

The client terminal 3 receives the omnidirectional synthesized image from the image providing server 1 every one per several tens second (one/several tens second), for example. Furthermore, the position/pose information obtaining means 311 obtains the position/pose information in every one per several tens second to one per several second (from one/several tens second to one/several ones), for example. Then, the extracting means 312 extracts the partial area image and renews the display image at every time of receiving (obtaining) a new omnidirectional synthesized image or new position/pose information.

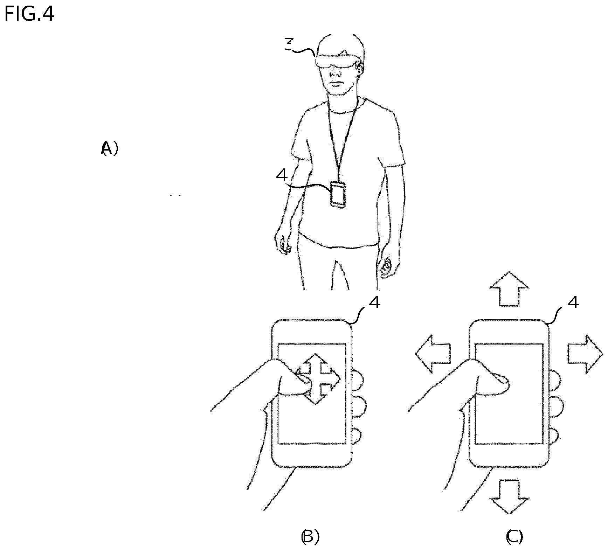

The instruction input unit 4 receives instructions from a user and transmits an instruction signal in accordance with the instructions from the user to the client terminal 3 through the communication unit 3. Fig. 4 (A) is a view for explaining the instruction input unit 4, and as shown in Fig. 4(A), the instruction input unit 4 may be carried by being held from a neck of a user in the case where the HMD is the client terminal 3.

Figs. 4(B) and 4(C) represent an example of a display area designating interface of the instruction input unit 4, which is an example of the instruction input unit 4 at a time of changing the display area (observing point or observer's eye) of the image observed by the display unit 32 of the HMS, in which the user assigns the display area in vertical and transverse directions by tapping on a panel of the instruction input unit 4 (Fig. 4(B)) or assign the display area by inclining or swinging the instruction input unit itself (Fig. 4(C)). Then, the instruction input unit 4 generates the display area assigning information in response to the indicated assignment. The thus generated display area assigning information is sent to the HMD through network or near field communication (NFC), and then, the position/pose information obtaining means 311 obtains the display area assigning information through the communication unit 33.

The instruction input unit 4 is not limited to one having a structure assigning the display area by tapping on the displayed image and the instruction input unit 4 may have a structure assigning the display area by voice or sound of a user through a microphone provided for the instruction input unit 4. Otherwise, it may be possible to trace eye movement by means of camera (for example, camera mounted on HMD), to detect the line of sight of the user and assign and instruct the display area in accordance with the detected line of sight direction.

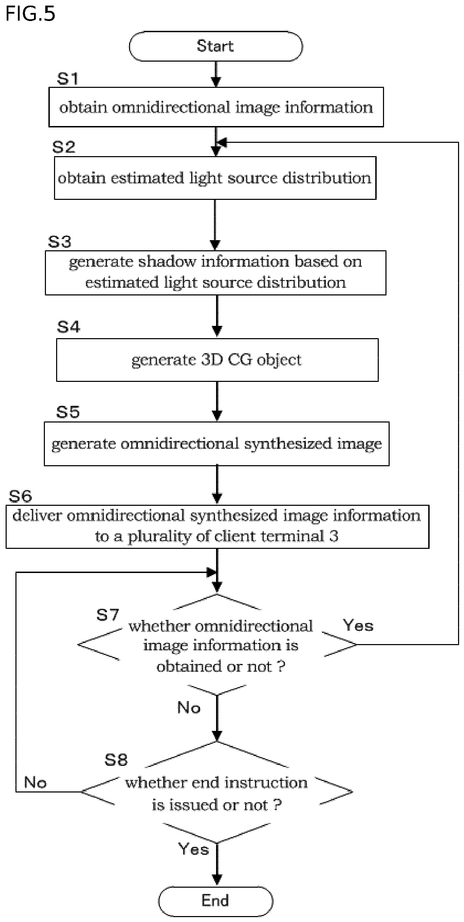

Fig. 5 is a flowchart representing the omnidirectional synthesized image delivery processing. The omnidirectional synthesized image delivery processing is a processing performed by the control unit 11.

First, the control unit 11 of the image providing sever 1 obtains the omnidirectional image information from the omnidirectional image obtaining camera 2 (Step S1). Next, the 3D object representing means 111 of the control unit 11 performs a light source distribution estimation processing. Based on the light source environment information of the actual world included in the omnidirectional image information obtained through the step S 1, the estimation distribution processing is performed to thereby obtain the estimated light source distribution (step S2). The light source environment information of the actual world adopts, for example, brightness information or so in a range of about several % to ten-and-several % from an upper end of the omnidirectional image shown by the omnidirectional image information.

Subsequently, the 3D object representing means 111 refers to the shadow information DB (database) 121, and generates shadow information based on the estimated light source distribution obtained by the step S2 (step S3).

Next, the 3D object representing means 111 of the control unit 11 performs the shadowing processing to the CG information DB 122 based on the shadow information generated in the step S3, and represents (prepare) the 3D CG object (step S4).

In the next step, the synthesizing means 112 of the control unit 11 superimposes the omnidirectional image shown in accordance with the omni-directional image information obtained by the step S1 and the 3D CG object generated by the step S4 to thereby generate the omnidirectional synthesized image (step S5). Thereafter, the control unit 11 distributes the omnidirectional synthesized image information representing the omnidirectional synthesized image generated in the step S5 to the client terminals 3 of the plural users (step S6).

Subsequently, the control unit 11 decides whether the next omnidirectional image information is obtained or not from the omnidirectional image obtaining camera 2, and in the judgment, when it is decided to be obtained ("YES": step S7), the step transfers to the step S2, and the processing represented by the steps S2 to S7 are repeatedly performed with respect to the next omnidirectional image information.

On the contrary, in the judgment, when it is decided not to be obtained ("NO": step S7), it is decided whether an end of indication is made or not (step S8). In the judgment, when there is no end of indication ("NO": step S8), the steps transfers to the step S7, and it is waited to receive the next omnidirectional image information from the omnidirectional image obtaining camera 2.

Incidentally, in a case where the end of processing is indicated from an input unit, not shown, of the image providing server 1 or an end of indication signal is received from a remote server manager through network ("YES": step S8), the processing is ended.

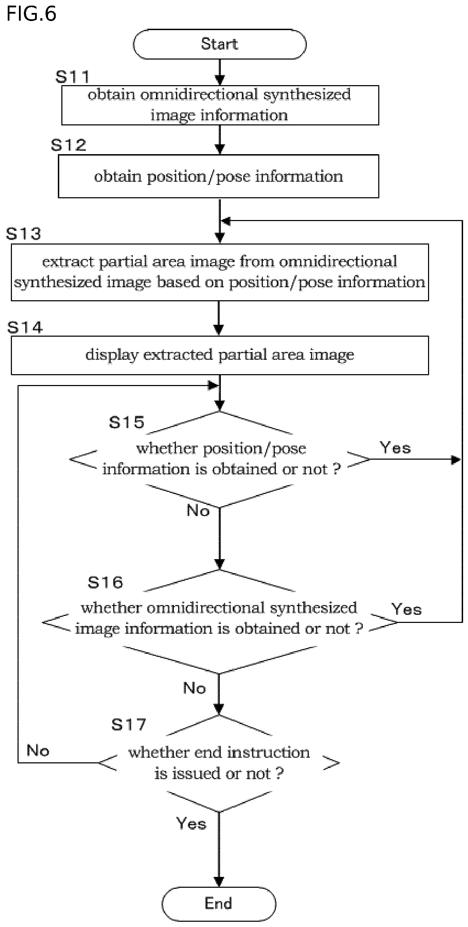

Fig. 6 is a flowchart representing the display processing of the client terminal 3. The display processing is a processing performed by the control unit 31.

First, the control unit 31 of the client terminal 3 obtains the omnidirectional synthesized image information (step S11) from the image providing server 1, and the position/pose information obtaining means 311 obtains the position/pose information (step S12).

Next, the extracting means 312 of the control unit 31 extracts a partial area image from the omnidirectional synthesized image indicated by the omnidirectional synthesized image information obtained by the step S1, based on the position/pose information obtained by the step S2 (Step S13). The control unit 31 displays the extracted partial area image on the display screen of a monitor or like (step S 14).

Subsequently, the control unit 31 decides whether the position/pose information obtaining means 311 obtains the next position/pose information or not (step S 15). As a result of the judgment, in a case of obtaining the next position/pose information ("YES": step S 15), the step transfers to the step S13, and the steps S 13 to S 15 are repeatedly performed with respect to the next position/ pose information.

On the other hand, as a result of the judgment in the step S 15, in the case of obtaining no next position/pose information ("NO": step S15), the control unit 31 decides whether the next omnidirectional synthesized image information from the image providing server 1 is obtained or not (step S16). As a result of this judgment, in a case of obtaining the next omnidirectional synthesized image information ("YES": step S16), the step transfers to the step S 13, and the steps S 13 to S16 are repeatedly performed to the next omnidirectional synthesized image information.

On the contrary, as a result of the judgment in the step S16, in the case of obtaining no next omnidirectional synthesized image information ("NO": step S16), the control unit 31 decides whether the process end instruction is obtained or not (step S 17). As a result of this judgment, in a case of no end instruction ("NO": step S17), the step transfers to the step S 15, and the control unit 31 waits till the receiving of the next omnidirectional synthesized image information from the image providing server 1 or till the obtaining of the next position/pose information by the position/pose information obtaining means 311.

On the other hand, as a result of the judgment in the step S 17, in a case where process end instructions are issued ("YES": step S 17), for example, in a case where the process end instructions are indicated from an input unit, not shown, of the client terminal 3 or process end instruction signal is received from the instruction input unit 4 through the communication unit 23, the process is ended.

As explained hereinbefore, in the first embodiment, the image providing server 1 represents a virtual object, synthesizes the virtual object and an omnidirectional image, and delivers or distributes the omnidirectional synthesized image information to a plurality of client terminals 3. At a time when the client terminals 3 receive the omnidirectional synthesized image from the image providing server 1, each of the client terminals is constructed to extract a partial area image based on the position/pose information and to display the partial area image on the display screen of a monitor or like. Therefore, each of the users can experience the Mixed Reality while freely changing his (or her) own line of sight without applying any loading in processing to the client terminal.

Furthermore, the 3D object representing means 111 estimates light source distribution based on the light source environment information included in the omnidirectional image information, generates shadow of the virtual image and represents the virtual image. According to such processing, it becomes possible to eliminate the necessity for separately preparing a specific light source information obtaining means such as camera with fish-eye lens or mirror ball, and to perform an appropriate shadowing based on the light source environment information included in the omnidirectional image information.

Still furthermore, the first embodiment is provided with the instruction input device 4, and the extracting means 312 is constructed so as to extract the partial area image in accordance with the display area assigning information from the instruction input device 4, whereby the user can assign a predetermined display area by means of the instruction input device 4.

### <Second Embodiment>

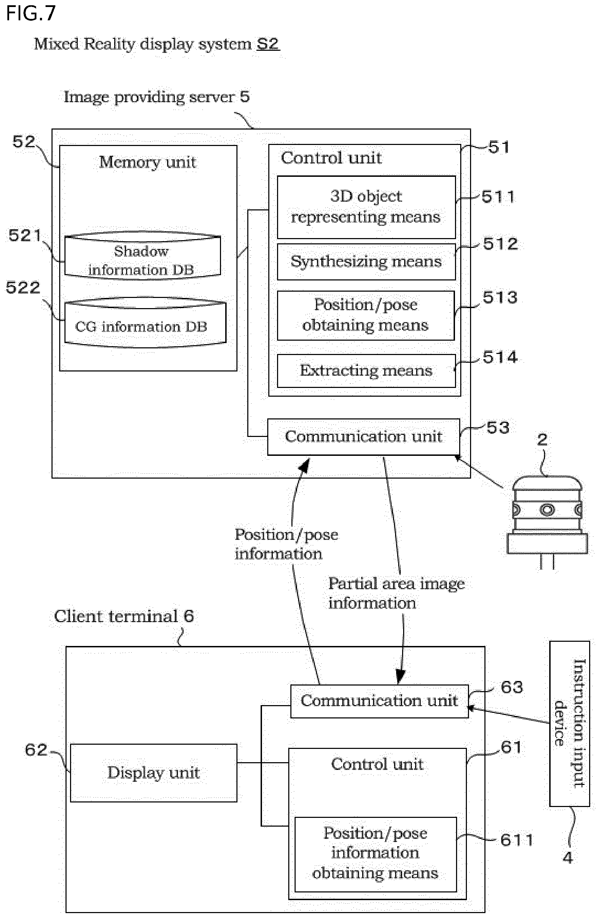

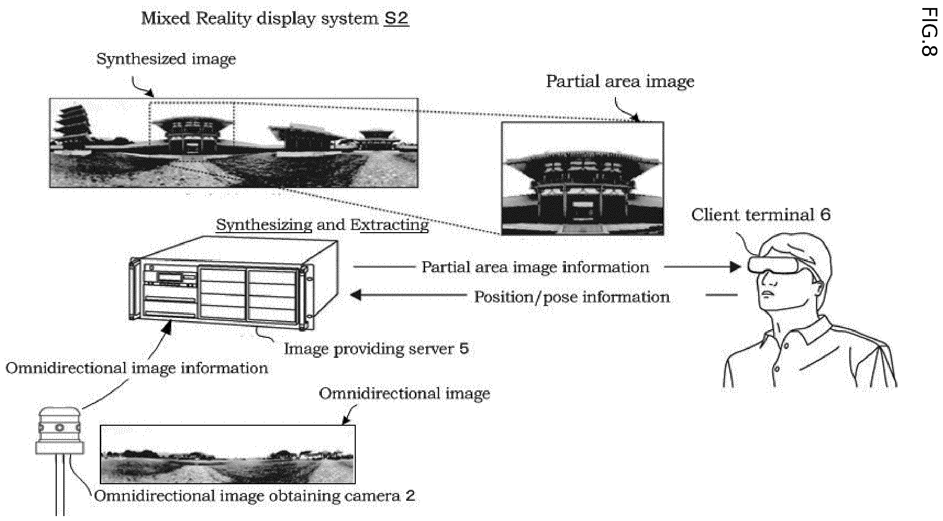

Fig. 7 is a block diagram representing a structural example of a Mixed Reality display system S2 according to a second embodiment, and Fig. 8 is a schematic explanatory view of the second embodiment. It is to be noted that, in the following, structures or arrangements substantially the same as or similar to those of the first embodiment will be omitted in explanation.

The Mixed Reality display system S2 is composed of an image providing server 5, an omnidirectional image obtaining camera 2, a plurality of client terminals 6, an instruction input device 4 and so on. Further, the omnidirectional image obtaining camera 2 and the instruction input device 4 have the same structure or configuration of the first embodiment.

The image server 1 is composed of a control unit 51 provided with a CPU having an operating (computing) function, a working RAM, a ROM storing various data and program, and the like, memory unit 52 provided with a hard disk drive and the like, and a communication unit 53 for performing communication, through various networks (including LAN (Local Area Network)), among the omnidirectional image obtaining camera 2, the client terminals 6, and other units or various peripheral machineries or like. The above respective units or sections are respectively connected by means of buses.

The memory unit 52 stores a shadow information database (DB) 521, a CG information database (DB) 522 and so on. The shadow information DB 521 has the same structure as that of the shadow information DB 121 of the first embodiment. The CG information DB 522 has the same structure of the CG information DB 122 of that of the first embodiment.

The control unit 51 is provided with 3D object representing means 511, synthesizing means 512, position/pose information obtaining means 513, extracting means 514 and so on. The 3D object representing means 511 has the same structure as that of the 3D object representing means 111 of the first embodiment. The synthesizing means 512 has the same structure as that of the synthesizing means 112 of the first embodiment.

The position/pose information obtaining means 513 obtains position/pose information of a target client terminal 6 through the communication unit 53.

The extracting means 514 extracts a partial area image from the omnidirectional synthesized image generated by the synthesizing means 512. More specifically, based on the omnidirectional synthesized image generated by the synthesizing means 512, an area in a direction shown by the position/pose information is captured and then extracted. The extracted partial area image is transmitted to the client terminal 6 through the communication unit 53 and displayed on the client terminal 6. Thus, the user can observe the partial area image in accordance with own position/pose from the omnidirectional composite image.

Each of the client terminals 6 is composed of a control unit 61 provided with a CPU having an operating (computing) function, a working RAM, a ROM storing various data and program, and the like, a display unit provided with a display screen such as monitor or like, and a communication unit 63 for performing communication, through various networks (including LAN (Local Area Network)), among the image providing server 5, or other devices or units, or various peripheral machineries such as instruction input device 4. The above respective units or devices are respectively connected by means of buses.

The control unit 61 is provided with a position/pose information obtaining means 611, which is substantially the same structure as that of the position/pose information obtaining means 311 of the first embodiment. When the position/pose information obtaining means 611 obtains position/pose information, the client terminal 6 transmits that position/pose information to the image providing server 5. Then, the client terminal 6 receives the partial area image information corresponding to the position/pose information from the image providing server 5, which is then displayed on the display screen of the display unit 62.

The omnidirectional image obtaining camera 2 performs taking repeatedly, for example, every time of one/several tens seconds, and the omnidirectional image information obtained in each taking time is transmitted to the image providing server 5. The 3D object representing means 511 and the synthesizing means 512 of the image providing server 5 generate an omnidirectional synthesized image every time of receiving a new omnidirectional image. Furthermore, the position/ pose information obtaining means 611 of the client terminal 6 obtains position/pose information every time of one/several tens seconds, for example, and then sends the obtained information to the image providing server 5. Thereafter, the position/pose information obtaining means 513 of the image providing server 5 receives (obtains) that information. The extracting means 514 performs extracting processing every time of generating new omnidirectional synthesized image or obtaining new position/pose information.

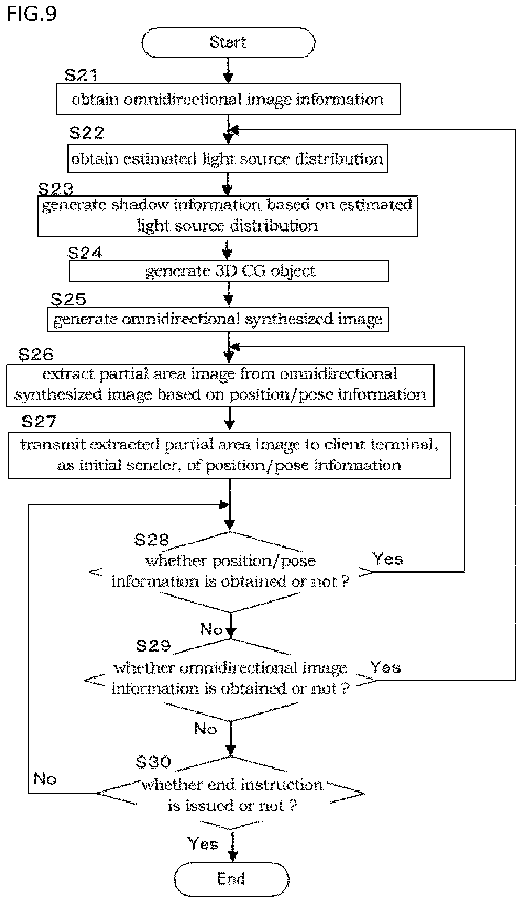

Fig. 9 is a flowchart representing the partial area image transmission processing of the image providing server 5. The partial area image transmission processing is a processing performed by the control unit 51, and this processing is started upon reception of the position/pose information from the client terminal 3 by the position/pose information obtaining means 513.

The processing during the steps S21 to S25 is substantially the same as that during the steps S1 to S5 in the first embodiment, and accordingly, the explanation thereof will be omitted herein.

Next, the control unit 51 extracts the partial area image from the omnidirectional synthesized image generated in the step S25 based on the position/pose information obtained by the position/pose information obtaining means 513 (step S26). The control unit 51 then transmits the extracted partial area image to the client terminal of the original sender of the portion pose information (step S27).

Subsequently, the control unit 51 decides whether the position/pose information obtaining means 513 obtains the next position/pose information from the client terminal 6 or not (step S28). As a result of judgment, in the case of obtaining the next position/ pose information, ("YES": step S28), the processing is transferred to the step S26 and the processing with respect to the next positional pose information in the steps S26 to S27 is performed repeatedly.

On the contrary, as a result of judgment, in the case of obtaining no next position/pose information, ("NO": step S28), the control unit 51 decides whether the next omnidirectional image information is obtained or not from the omnidirectional image obtaining camera 2 (step S29). As a result of judgment, in the case of obtaining the next omnidirectional image information, ("YES": step S29), the processing is transferred to the step S22 and the processing with respect to the next omnidirectional image information in the steps S22 to S29 is performed repeatedly.

On the contrary, as a result of judgment, in the case of obtaining no next omnidirectional image information, ("NO": step S29), the control unit 51 decides whether the processing end instruction is issued or not (step S30). As a result of judgment, in the case of no processing end instruction, ("NO": step S30), a step is transferred to the step S28, and the control unit 51 waits the reception of the next omnidirectional image information from the omnidirectional image obtaining camera 2 or waits the obtaining of the next position/pose information by the position/pose information obtaining means 513.

On the other hand, as a result of the judgment in step S30, in the case where the processing end instruction is issued from an input unit, not shown, of the image providing server 5, or where the processing end instruction from a remote server manager is received through network ("YES": step S30), the processing is ended.

As explained hereinabove, according to the second embodiment of the present invention, each of users can experience the Mixed Reality without loading in processing to the client terminal 6 while freely changing own line of sight of the user. Especially, since the image providing server 5 performs the shadowing, synthesizing, and extracting operations, a partial area image which can realize the experience of the Mixed Reality can be send to the client terminal 6.

Further, in the represented embodiments, the instruction input device 4 which can receive and/or transmit information from and/or to the client terminals 3 (or 6) through the network is constructed as one example of instruction input means of the present invention, the instruction input means may be provided inside each of the client terminals.

Furthermore, it may be possible to register plural kinds of CG informations to the CG information DB 122 and observe the synthesized images by plural kinds of 3D CG objects. In a case where the kind of the CG information is, for example, "advertisement of A company", "advertisement provided by B company", "cultural property building", and "road guidance", indication buttons corresponding to the "advertisement of A company", "advertisement provided by B company", "cultural property building", and "road guidance" may be displayed on the display panel. The 3D object representing means 111 (or 3D object representing means 511) generates the 3D CG object based on the CG information from the indication button selected by a user, and then, the synthesizing means 112 (or synthesizing means 512) generates the omnidirectional synthesized image by synthesizing the 3D CG object with the omnidirectional image. According to such structure, a user can observe a desired virtual object.

Moreover, the present invention is not limited to the flowcharts represented by Figs. 5, 6 and 9. For example, the respective judgments in the steps S7, S8, S15-S-17 and S28-S30 may be executed in parallel with other processing in the respective devices or units. More specifically, during the execution of the processing in the steps S 13 to S15 with respect to the next position/pose information in the case of obtaining the next position/pose information in the step S 15, the judgment processing whether the next omnidirectional synthesized image information is received or not.

### (Applications)

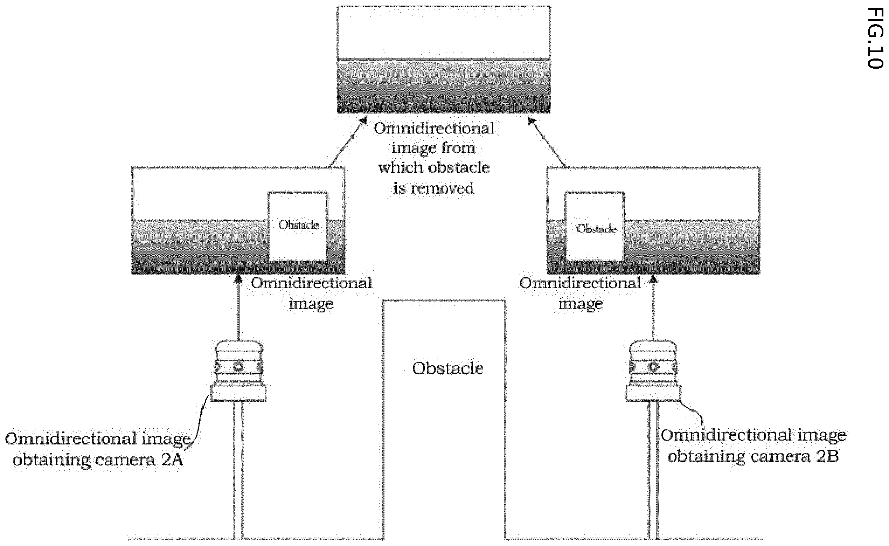

It may be possible to provide a plurality of omnidirectional image obtaining cameras, and Fig. 10 is a schematic view for explaining a case of arranging a plurality of omnidirectional image obtaining cameras.

For example, in a case where an obstacle which is not required to be photographed exists in an actual world (for example, obstacle blocking the user's line of sight, advertisement of specific company, article against public order and morality), one omnidirectional image may be generated by synthesizing omnidirectional image obtained by the omnidirectional image obtaining camera 2A and omnidirectional image obtained by the omnidirectional image obtaining camera 2B so as to remove the obstacle.

The control unit 11 (or control unit 51) of the image providing server 1 (or image providing server 5) obtains the omnidirectional images respectively from the omnidirectional image obtaining cameras 2A and 2B, removes the obstacles from both the omnidirectional images, and then synthesizes both the omnidirectional images to thereby generate one omnidirectional image.

It is to be noted that the application range of the present invention is not limited to the represented embodiments, and the present invention may be applied widely to systems showing the Mixed Reality.

### Reference Numeral

1 --- image providing server
111 --- 3D object representing means
112 --- synthesizing means
2 --- omnidirectional image obtaining camera
3 --- client terminal
311 --- position/pose information obtaining means
312 --- extracting means
32 --- display unit
4 --- instruction input device
5 --- image providing server
511 --- 3D object representing means
512 --- synthesizing means
513 --- position/pose information obtaining means
514 --- extracting means
6 --- client terminal
62 --- display unit

## Claims

1. A Mixed Reality display system (S1) which is constructed to perform communication between an image providing server (1) and a plurality of display devices,
the image providing server (1) comprising:
a virtual object representing means (111) that represents a three-dimensional virtual object;
synthesizing means (112) that synthesizes the three-dimensional virtual object represented by the virtual object representing means and an omnidirectional real scene image taken by an omnidirectional camera (2)
wherein the synthesizing means (112) generates an omnidirectional synthesized image by superimposing the omnidirectional real scene image with the synthesized three-dimensional virtual object; and
delivery means that delivers the omnidirectional synthesized image to the plurality of display devices,
and the display devices each comprising:
receiving means that receives the omnidirectional synthesized image from the image providing server (1);
position/pose information obtaining means (311) that obtains at least either one of position information or pose information defining line of sight of a user observing the display device;
extracting means (312) that extracts a partial area image from the omnidirectional synthesized image based on the position information and/or pose information; and
display means that displays the partial area image.

2. A Mixed Reality display method that displays an image synthesized by synthesizing a three-dimensional virtual object and an omnidirectional real scene image in a plurality of display devices, wherein
an image providing server performs a step of synthesizing the three-dimensional virtual object and the omnidirectional real scene image taken by an omnidirectional camera capable of a predetermined azimuth angle area,
wherein an omnidirectional synthesized image is generated by superimposing the omnidirectional real scene image with the synthesized three-dimensional virtual object, and a step of delivering the omnidirectional synthesized image after the synthesizing to a plurality of display devices, and
each of the display devices performs a step of obtaining at least either one of position information or pose information defining line of sight of a user observing the display device, a step of extracting a partial area image from the omnidirectional synthesized image based on the position information and/or pose information, and a step of displaying the partial area image.

## Patentansprüche

1. Ein Mixed-Reality-Anzeigesystem (S1), das aufgebaut ist, um eine Kommunikation zwischen einem Bildbereitstellungsserver (1) und einer Vielzahl von Anzeigevorrichtungen durchzuführen,
wobei der Bildbereitstellungsserver (1) Folgendes aufweist:
eine Einrichtung (111) zum Darstellen eines virtuellen Objekts, die ein dreidimensionales virtuelles Objekt darstellt;
eine Synthetisierungseinrichtung (112), die das dreidimensionale virtuelle Objekt, welches durch die Einrichtung zum Darstellen eines virtuellen Objekts dargestellt wird, und ein von einer omnidirektionalen Kamera (2) aufgenommenes Bild einer realen Szenerie synthetisiert
wobei die Synthetisierungseinrichtung (112) durch Überlagerung des omnidirektionalen Bilds einer realen Szenerie mit dem synthetisierten dreidimensionalen virtuellen Objekt ein omnidirektionales synthetisiertes Bild erzeugt; und
eine Liefereinrichtung, die das omnidirektionale synthetisierte Bild an die Vielzahl der Anzeigevorrichtungen liefert,
und wobei jede der Anzeigevorrichtungen Folgendes aufweist:
eine Empfangseinrichtung, die das omnidirektionale synthetisierte Bild von dem Bildbereitstellungsserver (1) empfängt;
eine Einrichtung zum Beziehen von Positions-/Haltungsinformationen, die wenigstens eines von entweder Positionsinformationen oder Haltungsinformationen bezieht, welche eine Sichtlinie eines die Anzeigevorrichtung betrachtenden Anwenders definieren;
eine Extraktionseinrichtung (312), die beruhend auf den Positionsinformationen und/oder Haltungsinformationen ein Teilbereichsbild aus dem omnidirektionalen synthetisierten Bild extrahiert; und
eine Anzeigeeinrichtung, die das Teilbereichsbild anzeigt.

2. Ein Mixed-Reality-Anzeigeverfahren, das ein Bild in einer Vielzahl von Anzeigevorrichtungen zeigt, wobei das Bild durch Synthetisieren eines dreidimensionalen virtuellen Objekts und eines omnidirektionalen Bilds einer realen Szenerie synthetisiert wird, wobei
ein Bildbereitstellungsserver einen Schritt des Synthetisierens des dreidimensionalen virtuellen Objekts und des omnidirektionalen Bilds einer realen Szenerie, welches durch eine zu einem vorbestimmten Azimutwinkelbereich fähige, omnidirektionale Kamera aufgenommen wurde,
wobei ein omnidirektionales synthetisiertes Bild durch ein Überlagern des omnidirektionalen Bilds einer realen Szenerie mit dem synthetisierten dreidimensionalen virtuellen Objekt erzeugt wird, und einen Schritt des Lieferns des omnidirektionalen synthetisierten Bilds nach dem Synthetisieren zu einer Vielzahl von Anzeigevorrichtungen, und
jede der Anzeigevorrichtungen einen Schritt des Beziehens von wenigstens eines von entweder Positionsinformationen oder Haltungsinformationen, welche eine Sichtlinie eines die Anzeigevorrichtung betrachtenden Anwenders definieren, einen Schritt des auf den Positionsinformationen und/oder Haltungsinformationen beruhenden Extrahierens eines Teilbereichsbilds aus dem omnidirektionalen synthetisierten Bild, und einen Schritt des Anzeigens des Teilbereichsbilds durchführt.

## Revendications

1. Système d'affichage en réalité mixte (S1), lequel est construit pour réaliser une communication entre un serveur de fourniture d'images (1) et une pluralité de dispositifs d'affichage,
le serveur de fourniture d'images (1) comprenant :
un moyen de représentation d'objet virtuel (111) qui représente un objet virtuel tridimensionnel ;
un moyen de synthétisation (112), lequel synthétise l'objet virtuel tridimensionnel représenté par le moyen de représentation d'objet virtuel et une image de scène réelle omnidirectionnelle prise par une caméra omnidirectionnelle (2),
dans lequel le moyen de synthétisation (112) génère une image synthétisée omnidirectionnelle en superposant l'image de scène réelle omnidirectionnelle avec l'objet virtuel tridimensionnel synthétisé, et
un moyen de remise, lequel remet l'image synthétisée omnidirectionnelle à la pluralité de dispositifs d'affichage,
chaque dispositif d'affichage comprenant :
un moyen de réception, lequel reçoit l'image synthétisée omnidirectionnelle du serveur de fourniture d'images (1) ;
un moyen d'obtention d'informations de position/pose (311), lequel obtient au moins soit des informations de position, soit des informations de pose définissant la ligne visuelle d'un utilisateur observant le dispositif d'affichage ;
un moyen d'extraction (312), lequel extrait une image de zone partielle de l'image synthétisée omnidirectionnelle sur la base des informations de position et/ou des informations de pose, et
un moyen d'affichage, lequel affiche l'image de zone partielle.

2. Procédé d'affichage en réalité mixte, lequel affiche une image synthétisée en synthétisant un objet virtuel tridimensionnel et une image de scène réelle omnidirectionnelle dans une pluralité de dispositifs d'affichage, dans lequel
un serveur de fourniture d'images exécute une étape pour synthétiser l'objet virtuel tridimensionnel et l'image de scène réelle omnidirectionnelle prise par une caméra omnidirectionnelle apte pour une zone d'angle azimut prédéterminée,
dans lequel une image synthétisée omnidirectionnelle est générée en superposant l'image de scène réelle omnidirectionnelle avec l'objet virtuel tridimensionnel synthétisé, et une étape pour remettre l'image synthétisée omnidirectionnelle après synthétisation à une pluralité de dispositifs d'affichage, et
chacun des dispositifs d'affichage exécute une étape pour obtenir au moins soit des informations de position, soit des informations de pose définissant la ligne visuelle d'un utilisateur observant le dispositif d'affichage, une étape pour extraire une image de zone partielle à partir de l'image synthétisée omnidirectionnelle sur la base des informations de position et/ou des informations de pose, et une étape pour afficher l'image de zone partielle.
